# EUROPÄISCHE PATENTSCHRIFT

(11) **EP 0 964 762 B1**
(45) Veröffentlichungstag und Bekanntmachung des Hinweises auf die Patenterteilung: **27.06.2001**
(21) Anmeldenummer: 98916853.9
(22) Anmeldetag: 03.03.1998
(51) Int. Cl.: B23C 5/20, B23B 51/04

(54) **ZIRKULARBOHRFRÄSER MIT WENDESCHNEIDPLATTEN UND ZUGEHÖRIGEN PLATTENSITZEN**
CIRCULAR DRILL CUTTER WITH INDEXABLE INSERTS AND PERTAINING TIP SEATS
FRAISE DE PERCAGE CIRCULAIRE AVEC PLAQUETTES AMOVIBLES ET SIEGES DE PLAQUETTE ASSOCIES

(30) Priorität: 07.03.1997 DE 19709436
(43) Veröffentlichungstag der Anmeldung: 22.12.1999
(73) Patentinhaber: Leeb, Felix, D-94405 Landau/Isar (DE)
(72) Erfinder: Leeb, Felix, D-94405 Landau/Isar (DE)
(74) Vertreter: Schön, Theodor, Patent- und Zivilingenieur
(86) Internationale Anmeldenummer: DE9800640
(87) Internationale Veröffentlichungsnummer: WO9840183

(56) Entgegenhaltungen:
- WO-A-97/10915

## Beschreibung

Die Erfindung betrifft einen Zirkularbohrfräser mit Wendeschneidplatten und zugehörigen Plattensitzen zum Herstellen von Taschen, Langlochausnehmungen, Durchgangsbohrungen ins volle Material mit der Möglichkeit des Hinterfräsens und rückwärtigem Ansenkens, Ausfräsungen von vorhandenen Ausnehmungen, wobei das Werkzeug auf einer CNC-gesteuerten Maschine drehangetrieben auf einer Bahn mit fortlaufender Z-Achszustellung, oder bei Ausnehmungen von großen Taschen und beim Kopierfräsen auch teilweise ohne Z-Achszustellung bewegt wird, wobei die Wendeschneidplatten pro Schneideneingriffsbereich eine Hauptstirnschneide und eine Stirnnebenschneide, einen Schlichtschneidenbereich sowie eine Querschneide die den Übergang vom Schlichtschneidenbereich zum nächsten Schneideneingriffsbereich darstellt, und daß der Übergang von der Hauptschneide zum nächsten Schneideneingriffsbereich durch eine Querschneide gebildet wird und die Wendeschneidplatte im Hauptschneidenbereich eine Spanformrille aufweist.

Aus der DE 4342 577 A1 sind Fräsbohrwerkzeuge zur Herstellung von Bohrungen, Passungen ins volle Material, Ausfräsungen und Gewinden in Verbindung mit CNC-gesteuerten Maschinen bekannt. In der DE 4342577 A1 sind bereits die äußeren Flankenschneiden in einen Schrupp- und Schlichtschneidenbereich aufgeteilt. Bei der DE 39 09 077 C2 kommen zur Erzeugung der Kernlochausnehmung jeweils pro Schneideneinheit zwei Stirnschneiden zum Einsatz. Um diese zwei Stirnseiten pro Wendeschneidplatte zur Verfügung zu haben, kommen bei der DE 39 09 077 C jeweils zwei Wendeschneidplatten in Dreiecksform zum Einsatz. Dies ist aber mit dem Nachteil behaftet, daß durch die Erforderlichkeit von jeweils zwei Wendeschneidplatten pro Schneideneinheit nur eine begrenzte Anzahl (die Hälfte) von Schneideneinheiten am Fräserschaft angebracht werden können. Durch diese zwei erforderlichen Wendeschneidplatten pro Schneideneinheit verdoppelt sich zum einen der Preis pro Schneideneinheit und zweitens erhöht sich dadurch beim Fräseinsatz mit dieser begrenzten Schneidenbestückung die Fertigungszeit im 100%. Des Weiteren ist auch bereits ein Verfahren zur Erzeugung von Passungen aus der bereits erwähnten DE 43 42 577 A1 bekannt, indem dort das jeweils zu erzeugende Schlichtmaß im Rückhub erzeugt werden soll. Erst durch diese Schneidengeometrie und dieser Verfahrenstechnik kann eine Passung ins volle Material ohne Werkzeugwechsel erzeugt werden.
Trotz dieser Verbesserungen ist in manchen Einsatzfällen ein wirtschaftlicher Einsatz nicht möglich. Zum einen kann selbst bei Ausbildung der Schneiden als Wendeschneidplatte diese nur einmal gedreht werden, zum anderen ist bei manchen Einsatzfällen, wie die Erstellung einer Tasche in Kopierfräsarbeit sowie Ausfräsungsarbeiten von Brennschnitten und vorgegossenen Ausnehmungen eine zweite innenliegende Stirnschneide nicht erforderlich.
Auch bei der Erstellung von Durchgangsbohrungen muß die innenliegende Stirnschneide nicht unbedingt auf gleicher Höhe liegen. Des Weiteren ist die rutschfeste Festlegung der Wendeschneidplatten am Trägerwerkzeug durch den in der DE 43 42 577 A 1 aufgezeigten Lösungsvorschlag (Ausnehmung und Röhrchen) bei schweren Zerspanarbeiten nicht gewährleistet. Ferner ist die Anzahl der am Fräskopf mittels Schraubenklemmung zu befestigenden Wendeschneidplatten durch den Freiraum des zum Wechseln erforderlichen Schlüssels (Torx-Schraubendreher) begrenzt. Zusätzlich soll auch die Möglichkeit einer Anfasung bei Durchgangsausnehmungen und Hinterfräsungen der Ausnehmungen möglich sein.

Der Erfindung liegt daher die Aufgabe zugrunde, einen wirtschaftlicher arbeitenden Zirkularbohrfräser mit Wendeschneidplatten zu kreieren, bei dem die Wendeschneidplatte öfter als einmal gedreht werden kann, den Schruppschneidenbereich zu verbessern, einen Schlichtschneidenbereich in diese Wendeschneidplatte zu integrieren und eine Schneide zum rückwärtigen Anfasen von Durchgangsausnehmungen, wobei mit dieser weiteren Schneide auch eine Hinterfräsung von Ausnehmungen möglich ist, und einen rutschfesten Plattensitz zu schaffen, wobei eine möglichst große Anzahl von Wendeschneidplatten mit verschiedenen Stirnschneiden am Zirkularbohrfräser befestigt werden sollen.

Die Aufgabe wird durch die in den Patentansprüchen 1 bis 3 angegebenen Merkmale gelöst.

Dabei weist die Wendeschneidplatte eine Dreiecksform auf, wodurch sie zweimal gedreht werden kann. Der Hauptschneidenbereich weist eine kurze gerade Hauptstirnschneide auf, und eine durch einen Radius ausgebildete Verbindungsschneide zur Schlichtschneide. Die Länge des Haupt- und Schlichtschneidenbereiches ist etwa so groß wie das Z-Zustellmaß pro Umlauf beträgt. Am Ende des Schlichtschneidenbereiches verläuft durch eine ca. 45° gebildete Schneide (welche als Fasenschneide von unten zum Fräseinsatz kommt) in einer Höhe von etwa dem halben Z-Zustellmaß zur nächsten Schneideneinheit. Durch die Schneidenanordnung kommt bei der Erstellung einer Bohrungsausnehmung ins volle Material beim Schruppvorgang bereits ein Teilbereich der Schlichtschneide und der Fasenschneide zum Schneideingriff. Daher kann mit einer so ausgebildeten Wendeschneidplatte eine begrenzt stufenlose Bohrungsausnehmung ins volle Material erzeugt werden. Dabei hängt der mögliche stufenlose Durchmesserbereich vom Abstand der innenliegenden Stirnschneide zur äußeren Stirnschneide ab (gleich zweimal Abstand). Um einen geringeren Schnittdruck und eine größere Standzeit zu erzielen, soll. der Hauptschneidenbereich schräg zur Fräserachse angestellt sein. Des Weiteren kann der als Schruppschneide wirkende Schneidenbereich zwei verschiedene Schneidenwinkel (z.B. 30° und 45°) haben.

Dabei kann dann eine Ausnehmung gleich angefast werden, zum anderen bewirkt dies, daß die in diesem Schneidenbereich erzeugten Späne stärker gerollt werden, mit dem Vorteil, daß sie leichter aus den Ausnehmungen entfernt werden können, was besonders bei tiefen Ausnehmungen von Vorteil ist. Durch die mit einem Radius ausgebildete Verbindungsschneide zum Schlichtschneidenbereich, kann diese Wendeschneidplatte auch zum Kopierfräsen eingesetzt werden. Um einen positiven Späneabtrag im Schruppbereich zu erreichen, ist auch dieser Schneidenbereich zur Fräserachse jeweils angestellt und mit einer Spanformrille und einer Spanleitstufe belegt.
Um eine möglichst große Anzahl von Wendeschneidplatten am Fräserschaft rutschsicher befestigen zu können, werden die Wendeschneidplatten, bedingt durch ihre komplexe Außenumfangsform, mit einer zurückgesetzten umlaufenden Fläche versehen, die derart ausgebildet ist, daß pro Schneidenbereich drei Auflageflächen entstehen, wobei jeweils zwei Auflageflächen von benachbarten Schneidenbereichen fluchtend zueinander liegen und daß der Plattensitz derart ausgestaltet ist, daß drei Auflageflächen, die mit den Auflageflächen der Wendeschneidplatte korrespondieren, von der Plattensitzfreifräsung hervorstehen. Die Anbringung einer möglichst großen Anzahl von Wendeschneidplatten wird auch dadurch erreicht, daß der Plattensitz radial negativ verschwenkt und zugleich axial negativ gedreht angeordnet ist.
Weitere vorteilhafte Ausbildungen ergeben sich dadurch, daß der Plattensitz axial um ca. +7" verschwenkt und radial um ca. -10° verdreht angeordnet ist daß der Freiwinkel der Wendeschneidplatte im eingebauten Zustand stirnseitig 7°-9° ergibt und im Umfangsschneidenbereich ein Freiwinkel von 9° -11° erreicht wird, wobei der Freiwinkel der Wendeschneidplatte allein in manchen Teilbereichen O° betragen kann, daß die Verbindungsschneide von der Hauptstirnschneide durch eine Querschneide oder durch eine gebrochene Linie gebildet ist und daß der Plattensitz auch für andere Wendeschneidplatten Verwendung finden kann. Die Erfindung ist in der nachfolgenden Beispielbeschreibung anhand einiger in den Zeichnungen dargestellten Ausführungsbeispiele im einzelnen beschrieben.
- Fig.1: zeigt eine Wendeschneidplatte mit eingebrachter abgesetzter umlaufender Anlagefläche u. einen Teil des Trägerwerkzeuges

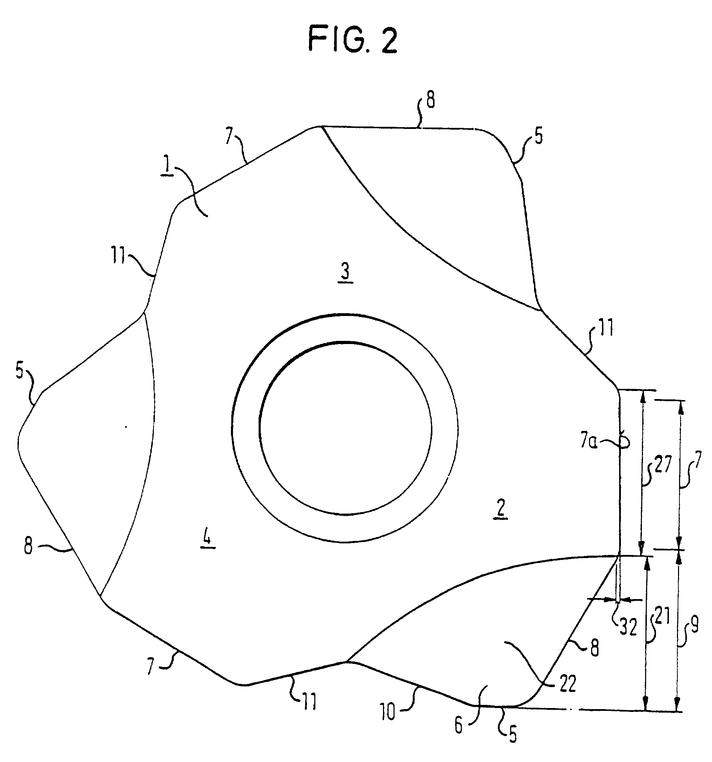

- Fig. 2: zeigt eine Wendeschneidplatte in Draufsicht
- Fig. 3: zeigt eine Wendeschneidplatte mit Schneidenübergang in Form einer Querschneide
- Fig. 4: zeigt eine Wendeschneidplatte mit gebrochener Verbindungsschneide Fig.5 zeigt einen Wendeplattenträger stirnseitig mit eingebrachten Wendeschneidplatten
- Fig. 6: zeigt eine Teilansicht eines Wendeplattenträgers mit verschwenktem Plattensitz
- Fig. 7: zeigt eine Teilansicht eines Wendeschneidplattenträgers mit derzeit bekanntem Plattensitz

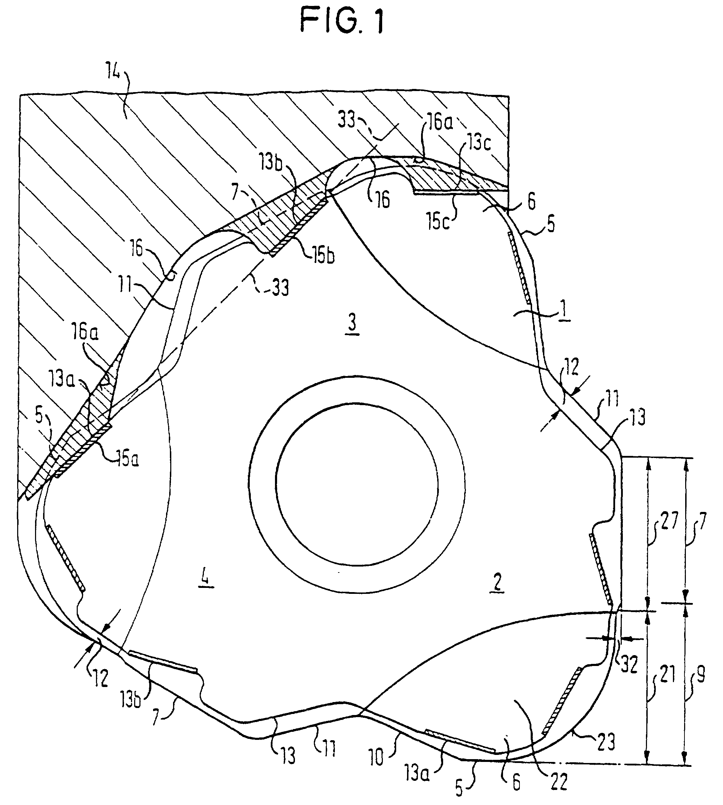

Der in Figur 1 gezeigte Plattensitz (25) ist mit einer Wendeschneidplatte (1) bestückt, welche drei drehsymmetrische Schneideneinheiten (2.3.4) aufweist. Dabei ist der jeweilige Schruppschneidenbereich (9) durch eine Hauptstirnschneide (6) gebildet, wobei sich diese in eine kurze, gerade Stirnschneide (5) und eine mit einem Radius (23) ausgebildete Verbindungsschneide zum Schlichtschneidenbereich (27) aufteilt. Dabei kann diese Verbindungsschneide auch eine gerade Querschneide (8} oder durch eine gebrochene Linie (24,24a), die mit einem Winkel von ca. 30" ansteigen kann um dann unter einem Winkel von ca. 4° (24a) weiter zu laufen ausgebildet sein. Der Schlichtschneidenbereich (27) ist durch eine gerade Schlichtschneide (7) gebildet, wobei diese jeweils in Richtung der Fräserachse (26) verläuft und an welche sich eine Querschneide (11 ) anschließt, wobei diese in etwa 45° bis zur nächsten Schneideneinheit (3) verläuft. An die gerade Hautpstirnschneide (5) schließt sich im innenliegenden Bereich eine weitere Querschneide (10) in Form einer geraden Linie oder Kurve an, die die Verbindung zur nächsten Schneideneinheit (4) bildet. Dabei sind alle Übergänge mit Radien versehen. Der gezeigte Plattensitz (25) ist derart gestaltet, daß mit einem unterschiedlichen Abstand (12) zum Außenumfang eine abgesetzte Fläche (13) die Wendeplatte (1 ) umläuft. Diese Fläche (13) ist derart ausgebildet, daß pro Schneidenbereich drei Auflageflächen (13a,13b,13c) entstehen, wobei jeweils zwei Auflageflächen (13a, 13b) von benachbarten Schneidenbereichen auf einer Linie (33) fluchtend zueinander liegen und daß der Plattensitz (25) derart ausgestaltet ist, daß er drei Auflageflächen (15a,15b,15c) besitzt, die mit den Auflageflächen der Wendeschneidplatte korrespondieren und die von der Plattenfreifräsung (16) hervorstehen. So gelangt die Wendeschneidplatte zu einer Dreipunktanlage.

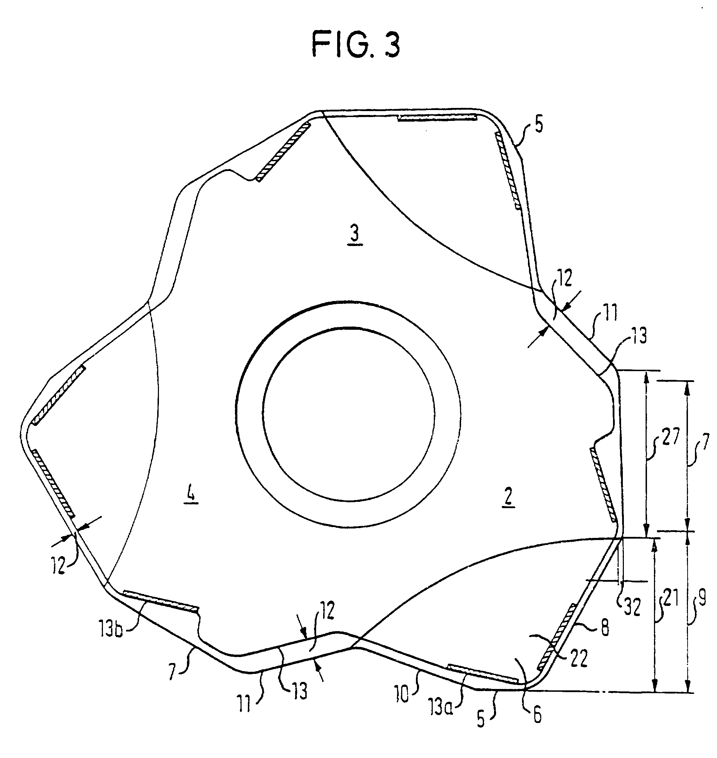

Fig. 3 zeigt eine Wendeschneidplatte (1) mit einer Querschneide (8) als Verbindungsschneide.

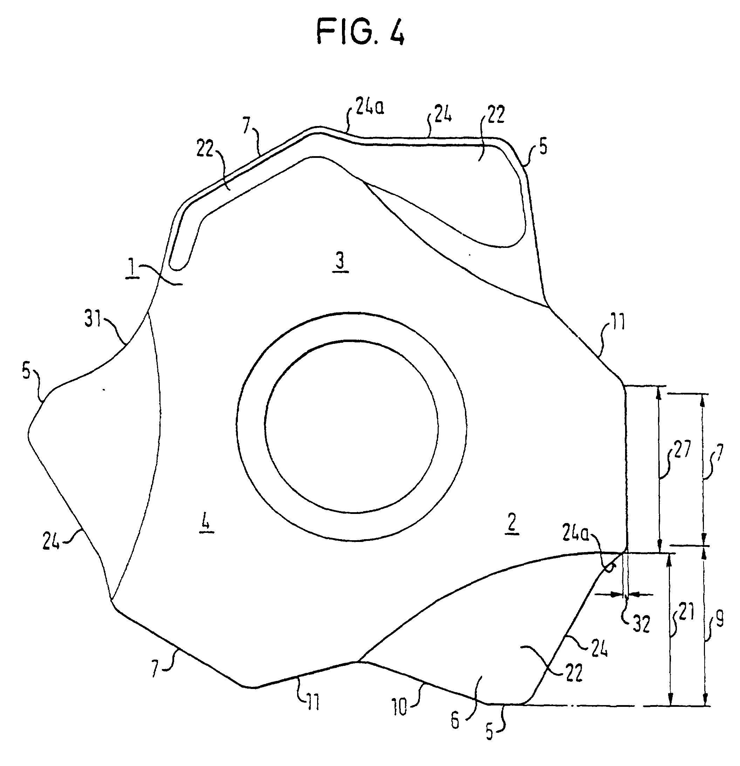

Fig. 4 zeigt eine Wendeschneidplatte (1) mit einer gebrochenen Verbindungsschneide (24,24a).

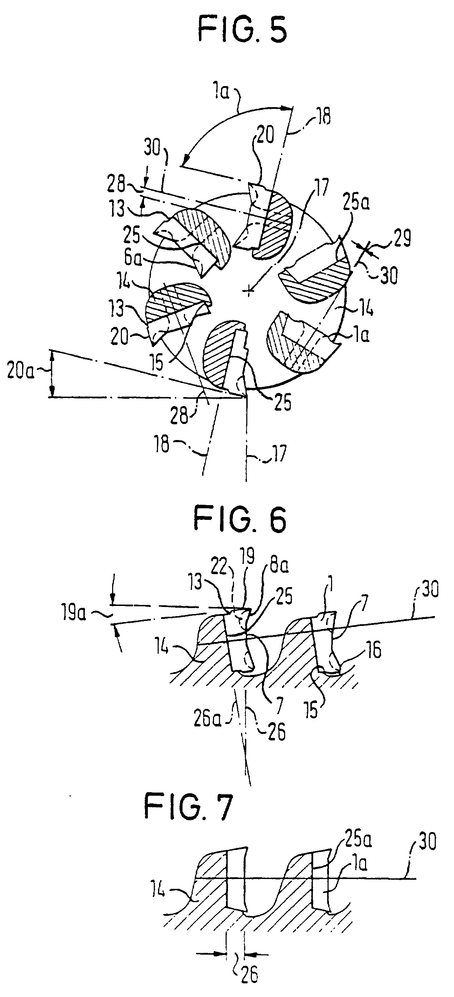

Um eine möglichst große Anzahl von Wendeschneidplatten (1) am Wendeschneidplattenträger (14) befestigen zu können, weist der Plattensitz (25) zum einen einen negativen Axialwinkel (26a) und einen negativen Radialwinkel (17) auf. Dadurch kann der Freiwinkel der Wendeschneidplatte (1) 0° an manchen Teilbereichen (la) betragen, und im eingebauten Zustand wird ein Freiwinkel von ca. 7°-12° erreicht. Die Verschwenkung des Plattensitzes (25) sowohl radial wie'auch axial weist die Vorteile auf, daß die Wendeschneidplatte (1) in ihrem Schruppbereich verstärkt wird, zum anderen wird dadurch auch der Wendeschneidplattenträger (14) im Fußbereich verstärkt. So wird in Fig. 6 im Schruppschneidenbereich (21) der Wendeschneidplatte (1) eine angestellte Fläche (8a) von ca. 18° im eingebauten Zustand ersichtlich. Die Schlichtschneide (7) und der Schlichtschneidenbereich (27) verlaufen parallel zur Fräserachse (26). Dadurch wird erreicht, daß die Schlichtschneide (7) über der Schruppschneide (8,23,24a) ca. 0,05 mm vorsteht (32). Da die Wendeschneidplatte (1) nur mit der Hauptschneide (6), der Schlichtschneide (7) und der Querschneide (11) in Schneideingriff gelangt, hat der innenliegende Schneidenbereich (6a) keinen Schneideingriff.

Auch ermöglicht eine negative radiale und negative axiale Verschwenkung des Plattensitzes (25) eine Vergrößerung des Freiraumes (28) für den Betätigungsschlüssel wie in den Fig. 5 und 6 dargestellt. So zeigt die Fig. 5, daß der Freiraum (29) eines nicht radial verschwenkten Plattensitzes kleiner ist, als der Freiraum (28) eines radial verschwenkten Plattensitzes (25).

## Patentansprüche

1. Zirkularbohrfräser mit Wendeschneidplatten (1) und zugehörigen Plattensitzen (25) zum Herstellen von Taschen, Langlochausnehmungen, Durchgangsbohrungen ins volle Material mit der Möglichkeit des Hinterfräsens und rückwärtigem Ansenkens, Ausfräsungen von bereits vorhanden Ausnehmungen, wobei das Werkzeug auf einer CNC-gesteuerten Maschine drehangetrieben auf einer Bahn mit fortlaufender Z-Achszustellung, oder bei Ausnehmung von großen Taschen und beim Kopierfräsen auch teilweise ohne Z-Achszustellung bewegbar ist, wobei die Wendeschneidplatten pro Schneideneingriffbereich eine Hauptstirnschneide (6) und eine Stirnnebenschneide mit jeweils äußeren und inneren Flankenschneiden aufweist einen Schlichtschneidenbereich (27) sowie eine Querschneide (8) die den Übergang von der Hauptschneide zum nächsten Schneideneingriffsbereich durch eine Querschneide gebildet wird und die Wendeschneidplatte im Hauptschneidenbereich eine Spanformrille aufweist,
dadurch gekennzeichnet, daß
die Wendeschneidplatte (1) jeweils drei gleiche Schneideneingriffsbereiche (2,3,4) aufweist, die jeweils um 120" zueinander verdreht angeordnet sind wobei die Hauptstirnschneide (6) durch eine kurze gerade Stirnschneide (5) und eine durch einen Radius (23) ausgebildete Verbindungsschneide zur Schlichtschneide (7) aufweist, die Querschneide (11) von der Schlichtschneide (7) zum nächsten Schneidenbereich (3) als Senkschneide ausgebildet ist, sowie eine umlaufende, in unterschiedlichem Abstand zum Umfang, abgesetzte Fläche (13), die derart ausgebildet ist, daß pro Schneidenbereich (2,3,4) drei Auflageflächen (15a,15b,15c) entstehen, wobei jeweils zwei Auflageflächen (15a,15b) von benachbarten Schneidenbereichen (3,4) in einer Linie (33) fluchtend zueinander liegen und daß der Plattensitz (25) derart ausgestaltet ist, daß er drei Auflageflächen (13a,13b,13c) besitzt, die mit den Auflageflächen (15a,15b,15c) der Wendeschneidplatte (1 ) korrespondieren, und die von der Plattensitzfreifräsung (16) hervorstehen, und daß der Plattensitz (25) um einen Radialwinkel (17) negativ verschwenkt und zugleich um einen Axialwinkel (26a) negativ gedreht angeordnet ist.

2. Zirkularbohrfräser mit Wendeschneidplatten (1) und zugehörigen Plattensitzen (25) zum Herstellen von Taschen, Langlochausnehmungen, Durchgangsbohrungen ins volle Material mit der Möglichkeit des Hinterfräsens und rückwärtigem Ansenkens, Ausfräsungen von bereits vorhanden Ausnehmungen, wobei das Werkzeug auf einer CNC-gesteuerten Maschine drehangetrieben auf einer Bahn mit fortlaufender Z-Achszustellung, oder bei Ausnehmung von großen Taschen und beim Kopierfräsen auch teilweise ohne Z-Achszustellung bewegbar ist, wobei die Wendeschneidplatten, pro Schneideneingriffbereich eine Hauptstirnschneide (6) und eine Stirnnebenschneide mit jeweils äußeren und inneren Flankenschneiden aufweist einen Schlichtschneidenbereich (27) sowie eine Querschneide (8) die den Übergang von der Hauptschneide zum nächsten Schneideneingriffsbereich durch eine Querschneide gebildet wird und die Wendeschneidplatte im Hauptschneidenbereich eine Spanformrille aufweist,
dadurch gekennzeichnet, daß
die Wendeschneidplatte (1) jeweils drei gleiche Schneideneingriffsbereiche (2,3,4) aufweist, die jeweils um 120° zueinander verdreht angeordnet sind wobei die Hauptstirnschneide (6) durch eine kurze gerade Stirnschneide (5) und eine gerade Querschneide (8) als Verbindungsschneide zur Schlichtschneide (7) aufweist, die Querschneide (11) von der Schlichtschneide (7) zum nächsten Schneidenbereich (3) als Senkschneide ausgebildet ist, sowie eine. umlaufende, in unterschiedlichem Abstand zum Umfang, abgesetzte Fläche (13), die derart ausgebildet ist, daß pro Schneidenbereich (2,3,4) drei Auflageflächen (15a,15b,15c) entstehen, wobei jeweils zwei Auflageflächen (15a,15b) von benachbarten Schneidenbereichen (3,4) in einer Linie (33) fluchtend zueinander liegen und daß der Plattensitz (25) derart ausgestaltet ist, daß er drei Auflageflächen (13a,13b,13c) besitzt, die mit den Auflageflächen (15a,15b,15c) der Wendeschneidplatte (1) korrespondieren, und die von der Plattensitzfreifräsung (16) hervorstehen, und daß der Plattensitz (25) um einen Radialwinkel (17) negativ verschwenkt und zugleich um einen Axialwinkel (26a) negativ gedreht angeordnet ist.

3. Zirkularbohrfräser mit Wendeschneidplatten (1) und zugehörigen Plattensitzen (25) zum Herstellen von Taschen, Langlochausnehmungen, Durchgangsbohrungen ins volle Material mit der Möglichkeit des Hinterfräsens und rückwärtigem Ansenkens, Ausfräsungen von bereits vorhanden Ausnehmungen, wobei das Werkzeug auf einer CNC-gesteuerten Maschine drehangetrieben auf einer Bahn mit fortlaufender Z-Achszustellung, oder bei Ausnehmung von großen Taschen und beim Kopierfräsen auch teilweise ohne Z-Achszustellung bewegbar ist, wobei die Wendeschneidplatten, pro Schneideneingriffbereich eine Hauptstirnschneide (6) und eine Stirnnebenschneide mit jeweils äußeren und inneren Flankenschneiden aufweist einen Schlichtschneidenbereich sowie eine Querschneide (8) die den Übergang von der Hauptschneide zum nächsten Schneideneingriffsbereich durch eine Querschneide gebildet wird und die Wendeschneidplatte im Hauptschneidenbereich eine Spanformrille aufweist,
dadurch gekennzeichnet, daß
die Wendeschneidplatte (1) jeweils drei gleiche Schneideneingriffsbereiche (2,3,4) aufweist, die jeweils um 120° zueinander verdreht angeordnet sind wobei die Hauptstirnschneide (6) durch eine kurze gerade Stirnschneide (5) und eine gebrochene Linie (24,24a) Verbindungsschneide zur Schlichtschneide (7) aufweist, die Querschneide (11) von der Schlichtschneide (7) zum nächsten Schneidenbereich (3) als Senkschneide ausgebildet ist, sowie eine umlaufende, in unterschiedlichem Abstand zum Umfang, abgesetzte Fläche (13), die derart ausgebildet ist, daß pro Schneidenbereich (2,3,4) drei Auflageflächen (15a,15b,15c) entstehen, wobei jeweils zwei Auflageflächen (15a,15b) von benachbarten Schneidenbereichen (3,4) in einer Linie (33) fluchtend zueinander liegen und daß der Plattensitz (25) derart ausgestaltet ist, daß er drei Auflageflächen (13a,13b,13c) besitzt, die mit den Auflageflächen (15a,15b,15c) der Wendeschneidplatte (1 ) korrespondieren und die von der Plattensitzfreifräsung (16) hervorstehen, und daß der Plattensitz (25) um einen Radialwinkel (17) negativ verschwenkt und zugleich um einen Axialwinkel (26a) negativ gedreht angeordnet ist.

4. Zirkularbohrfräser nach einem der Ansprüche 1-3 dadurch gekennzeichnet, daß der Freiwinkel (19a) der Wendeschneidplatte (1) im eingebauten Zustand stirnseitig 7°-9° ergibt und im Umfangsschneidenbereich ein Freiwinkel (20a) von 9°-11° erreicht wird, wobei der Freiwinkel der Wendeschneidplatte allein 0° betragen kann.

5. Zirkularbohrfräser nach einem der Ansprüche 1-4 dadurch gekennzeichnet, daß der Plattensitz (25) auch für andere Wendeschneidplatten verwendbar ist.

## Claims

1. A circular drill cutter for producing pockets, elongate slotted holes, through-bores in a solid material with a possibility of relief milling and rearward counterbohring, reaming of already produced openings, wherein the tool is rotatably driven on CNC-controlled machine-tool and is displaced along a path with a continuous feeding along a Z-axis or, during formation of large pockets and during copy milling, is driven without being fed along the Z-axis, the circular drill cutter comprising a plurality of indexable bits; and a plurality of bit seats for supporting the bits, wherein a indexable bit (1) has three identical cutting engagement regions (2,3,4) offset relative to each other by 120", each cutting engagement region including a main face cutting edge having a short straight main face cutting edge (5), a finishing cutting edge (7), and a circular connection cutting edge (23) extending between the main face cutting edge (6) and the finishing cutting edge C7), wherein the indexable bit (1) has a plurality of cross-cutting edges (11)extending, respectively, between the finishing cutting edges of respective cutting engagement regions and adjacent cutting engagement regions and formed as countersunk cutting edges, wherein the indexable bit (1) has an offset circuferential surface (13) spaced a different distance from a bit circumference and including three contact surfaces (15a,15b,15c) associated with the three cutting engagement regions (2, 3, 4), respectively, two respective contact surfaces (15a,15b) of two adjacent cutting regions (3, 4) being aligned with each other along a straight line (33), and wherein a bit seat (225) has three contact surfaces (13a,13b,13c) corresponding to the three contact surfaces (15a,15b, 15c) of the indexable bit (1) and projecting from a milled surface (16) of the bit seat (25), the bit seat (25), the bit seat (25) being displaced by a negative radial angle (17) and pivoted by a negative axial angle (26a).

2. A circular drill cutter for producing pockets, elongate slotted holes, through-bores in a solid material with a possibility of relief milling and rearward counterbohring, reaming of already produced openings, wherein the tool is rotatably driven on CNC-controlled machine-tool and is displaced along a path with a continuous feeding along a Z-axis or, during formation of large pockets and during copy milling, is driven without being fed along the Z-axis, the circular drill cutter comprising a plurality of indexable bits; and a plurality of bit seats for supporting the bits, wherein a indexable bit (1) has three identical cutting engagement region (2, 3, 4) offset relative to each other by 120", each cutting engagement region including a main face cutting edge having a short straight main face cutting edge (5), a finishing cutting edge (7), a straight cross-cutting connection edge (8) extending between the main face cutting edge (6) and the finishing cutting edge (7), wherein the indexable bit (I) has a plurality of cross-cutting edges (11) extending, respectively, between the finishing cutting edges of respective cutting engagement regions and adjacent cutting engagement regions and formed as countersunk cutting edges, wherein the indexable bit (1) has an offset circumferential surface (13) spaced a different distance from a bit circumference and including three contact surfaces (15a,15b,15c) associated with the three cutting engagement regions (2, 3, 4), respectively, two respective contact surfaces (15a, 15b) of two adjacent cutting regions (3, 4) being aligned with each other along a straight line (33), and wherein a bit seat (25) has three contact surfaces (13a,13b, 13c) corresponding to the three contact surfaces (15a, 15b, 15c) of the indexable bit (1) and projecting from a milled surface (16) of the bit seat (25), the bit seat (25) being displaced by a negative radial angle (17) and pivoted by a negative axial angle (26a).

3. A circular drill cutter for producing pockets, elongate slotted holes, through-bores in a solid material with a possibility of reliefmilling and rearward counterbohring, reaming of already produced openings, wherein the tool is rotatably driven on CNC-controlled machine-tool and is displaced along a path with a continuous feeding along a Z-axis or, during formation of large pockets and during copy milling, is driven without being fed along the Z-axis, the circular drill cutter comprsing a plurality of indexable bits; and a plurality of bit seats for supporting the bits, wherein a indexable bit (1) has three identical cutting engagement regions (2,3,4) offset relative to each other by 120", each cutting engagement region including a main face cutting edge having a short straight main face cutting edge (5), a finishing cutting edge (7), a connection cutting edge formed by a broken line (24, 24a) and extending between the main face cutting edge (6) and the finishing cutting edge(7), wherein the indexable bit (1) has a plurality of cross-cutting edges (11) extending, respectively, between the finishing cutting edges of respective cutting engagement regions and adjacent cutting engage-ment regions and formed as countersunk cutting edges, wherein the indexable bit (1) has an offset circumferential surface (13) spaced a different distance from a bit circumference and including three contact surfaces (15a,15b,15c) associated with the three cutting engagement regions (2, 3, 4), respectively, two respective contact surfaces (15a,15b) of two adjacent cutting regions (3, 4) being aligned with each other along a straight line (33), and wherein a bit seat (25) has three contact surfaces ( 13a,13b,13c) corresponding to the three contact surfaces (15a, 15b, 15c) of the indexable bit (1)and projecting from a milled surface (16) of the bit seat (25), the bit seat (25), the bit seat (25) being displaced by a negative radial angle (17) and pivoted by a negative axial angle (26a).

4. A circular drill cutter according to any of claims 1-3, wherein the indexable bit (1) has a front clearance angle ( 19a) which, in a mounted condition, amounts to 7"-9", and a clearance angle (20a) of 9" -11 " in the circumferential cutting region.

5. A circular drill cutter according to any of claims 1-4, wherein the bit seat (25) is also usable to other kinds of bits.

## Revendications

1. Fraiseuse-aléseuse circulaire avec des plaquettes de coupe réversibles et des sièges de plaquettes correspondants pour usiner dans du matériau plein des poches, des trous oblongs, des alésages traversants, offrant la possibilité de détalonner, de chanfreiner en arrière et de fraiser des évidements déjà existants, étant observé que
- la fraiseuse-aléseuse est entraînée en rotation par une machine à commande CNC sur une trajectoire avec avance continue selon l'axe Z ou est déplaçable partiellement sans avance selon l'axe Z lors de l'évidage de poches de grandes dimensions ou du fraisage sur fraiseuse à copier,
- chaque zone de coupe de la plaquette de coupe réversible comporte une lame frontale principale, une lame frontale secondaire avec des lames latérales extérieures et intérieures, une lame de finissage ainsi qu'une lame transversale assurant la transition entre la lame principale et la prochaine zone de coupe,
- la plaquette réversible comporte dans la zone de la lame principale une rainure pour la formation de copeaux,
**caractérisée en ce que** la plaquette de coupe réversible (1) comporte, d'une part, trois zones de coupe identiques (2), (3), (4) disposées l'une par rapport à l'autre avec un décalage de 120° dans le sens de la rotation, dont la lame frontale principale (6) se subdivise en une courte lame droite (5) et une lame présentant un rayon (23) formant transition vers la lame de finissage (7) et dont la lame transversale (11) entre la lame de finissage (7) et la prochaine zone de coupe (3) est formée d'une lame à chanfreiner, et, d'autre part, une surface étagée en retrait (13) de profondeur variable par rapport à la périphérie de la plaquette et s'étendant sur tout le pourtour de celle-ci de sorte que chaque zone de coupe présente trois surfaces d'appui (15a), (15b), (15c), étant précisé que deux surfaces d'appui (15a) et (15b) appartenant à des zones de coupe voisines (3), (4) sont alignées sur une même ligne (33), et **en ce que** le siège (25) de la plaquette de coupe est conçu de façon à présenter trois zones d'appui (13a), (13b), (13c) correspondant aux surfaces d'appui (15a), (15b), (15c) de la plaquette de coupe réversible (1) et qui sont saillantes sur le fraisage (16), et, est disposé avec simultanément un angle négatif de pivotement radial (17) et un angle négatif de rotation axiale (26a).

2. Fraiseuse-aléseuse circulaire avec des plaquettes de coupe réversibles et des sièges de plaquettes correspondants pour usiner dans du matériau plein des poches, des trous oblongs, des alésages traversants, offrant la possibilité de détalonner, de chanfreiner en arrière et de fraiser des évidements déjà existants, étant observé que
- la fraiseuse-aléseuse est entraînée en rotation par une machine à commande CNC sur une trajectoire avec avance continue selon l'axe Z ou est déplaçable partiellement sans avance selon l'axe Z lors de l'évidage de poches de grandes dimensions ou du fraisage sur fraiseuse à copier,
- chaque zone de coupe de la plaquette de coupe réversible comporte une lame frontale principale, une lame frontale secondaire avec des lames latérales extérieures et intérieures, une lame de finissage ainsi qu'une lame transversale assurant la transition entre la lame principale et la prochaine zone de coupe,
- la plaquette réversible comporte dans la zone de la lame principale une rainure pour la formation de copeaux,
**caractérisée en ce que** la plaquette de coupe réversible (1) comporte, d'une part, trois zones de coupe identiques (2), (3), (4), disposées l'une par rapport à l'autre avec un décalage de 120° dans le sens de la rotation, dont la lame frontale principale (6) se subdivise en une courte lame droite (5) et une lame transversale (8) formant transition vers la lame de finissage et dont la lame transversale (11) entre la lame de finissage (7) et la prochaine zone de coupe (3) est formée d'une lame à chanfreiner, et, d'autre part, une surface étagée en retrait (13) de profondeur variable par rapport à la périphérie de la plaquette et s'étendant sur tout le pourtour de celle-ci de sorte que chaque zone de coupe présente trois surfaces d'appui (15a), (15b), (15c), étant précisé que deux surfaces d'appui (15a) et (15b) appartenant à des zones de coupe voisines (3), (4) sont alignées sur une même ligne (33), et **en ce que** le siège (25) de la plaquette de coupe est conçu de façon à présenter trois zones d'appui (13a), (13b), (13c) correspondant aux surfaces d'appui (15a), (15b), (15c) de la piaquette de coupe réversible (1) et qui sont saillantes sur le fraisage (16), et, est disposé avec simultanément un angle négatif de pivotement radial (17) et un angle négatif de rotation axiale (26a).

3. Fraiseuse-aléseuse circulaire avec des plaquettes de coupe réversibles et des sièges de plaquettes correspondants pour usiner dans du matériau plein des poches, des trous oblongs, des alésages traversants, offrant la possibilité de détalonner, de chanfreiner en arrière et de fraiser des évidements déjà existants, étant observé que
- la fraiseuse-aléseuse est entraînée en rotation par une machine à commande CNC sur une trajectoire avec avance continue selon l'axe Z ou est déplaçable partiellement sans avance selon l'axe Z lors de l'évidage de poches de grandes dimensions ou du fraisage sur fraiseuse à copier,
- chaque zone de coupe de la plaquette de coupe réversible comporte une lame frontale principale, une lame frontale secondaire avec des lames latérales extérieures et intérieures, une lame de finissage ainsi qu'une lame transversale assurant la transition entre la lame principale et la prochaine zone de coupe,
- la plaquette réversible comporte dans la zone de la lame principale une rainure pour la formation de copeaux,
**caractérisée en ce que** la plaquette de coupe réversible (1) comporte, d'une part, trois zones de coupe identiques (2), (3), (4), disposées l'une par rapport à l'autre avec un décalage de 120° dans le sens de la rotation, dont la lame frontale principale (6) se subdivise en une courte lame droite (5) et une lame de transition vers la lame de finissage (7) ayant la forme d'une ligne coupée (24), (24a) et dont la lame transversale (11) entre la lame de finissage (7) et la prochaine zone de coupe (3) est formée d'une lame à chanfreiner, et, d'autre part, une surface étagée en retrait (13) de profondeur variable par rapport à la périphérie de la plaquette et s'étendant sur tout le pourtour de celle-ci de sorte que chaque zone de coupe présente trois surfaces d'appui (15a), (15b), (15c), étant précisé que deux surfaces d'appui (15a) et (15b) appartenant à des zones de coupe voisines (3), (4) sont alignées sur une même ligne (33), et **en ce que** le siège (25) de la plaquette de coupe est conçu de façon à présenter trois zones d'appui (13a), (13b), (13c) correspondant aux surfaces d'appui (15a), (15b), (15c) de la plaquette de coupe réversible (1) et qui sont saillantes sur le fraisage (16), et, est disposé avec simultanément un angle négatif de pivotement radial (17) et un angle négatif de rotation axiale (26a).

4. Fraiseuse-aléseuse circulaire selon l'une des revendications 1 à 3 **caractérisée en ce que** l'angle de dépouille (19a) de la plaquette de coupe réversible (1) après montage est compris entre 7° et 9° et qu'un angle de dépouille (20a) compris entre 9° et 11° est atteint dans la zone de coupe périphérique, l'angle de dépouille de la plaquette de coupe seule pouvant être de 0°.

5. Fraiseuse-aléseuse circulaire selon l'une des revendications 1 à 4 **caractérisée en ce que** le siège (25) de la plaquette de coupe peut être utilisé également pour d'autres plaquettes de coupe réversibles.
